**Europäisches Patentamt**

**European Patent Office**

**Office européen des brevets**

(11) Veröffentlichungsnummer: **0 032 228**
A2

(12) # EUROPÄISCHE PATENTANMELDUNG

(21) Anmeldenummer: 80108104.3

(22) Anmeldetag: 22.12.80

(51) Int. Cl.³: **B 01 D 29/32**
//B01D37/02, B01D39/16

(30) Priorität: 10.01.80 CH 166 80

(43) Veröffentlichungstag der Anmeldung:
22.07.81 Patentblatt 81/29

(84) Benannte Vertragsstaaten:
AT BE CH DE FR GB IT LI LU NL SE

(71) Anmelder: Filtrox Maschinenbau A.-G.
Moosmühlenstrasse 6
CH-9030 St. Gallen(CH)

(72) Erfinder: Meier, Josef
Sonnenhaldenstrasse 10
CH-9032 Engelburg(CH)

(74) Vertreter: Steudtner, Werner, Dipl.-Ing.
Lindenhof 5
CH-8604 Hegnau(CH)

(54) Verwendung poröser Filterrohre in Anschwemm-Kerzenfiltern.

(57) Es wurde überraschenderweise gefunden, dass sich bekannte poröse Filterrohre aus aneinandergesinterten Partikeln eines hochmolekularen, chemikalien- und wasserbeständigen Kunststoffes, die bisher hauptsächlich als Filterelemente für Staubfilter im Bergbaubereich angewendet wurden, als die die Anschwemmschichten tragenden Teile der Filterkerzen von Anschwemm-Kerzenfiltern verwenden lassen. Diese neue Verwendungsmöglichkeit der bekannten porösen Filterrohre ist insofern überraschend, als alle bisherigen Versuche zur Verwendung von porösen Filterkerzen für Anschwemm-Kerzenfilter fehlgeschlagen sind, weil die porösen Filterkerzen bei diesen Versuchen immer schon nach relativ kurzer Zeit verstopft waren. Der Hauptvorteil der Verwendung dieser bekannten porösen Filterrohre als Filterkerzen in Anschwemm-Kerzenfiltern ist, dass solche Filterkerzen eine 100%-ige Sicherheit vor Durchbrüchen der Anschwemmschicht bieten und damit das bisher noch erforderliche nachgeschaltete Schichtenfilter entfallen kann.

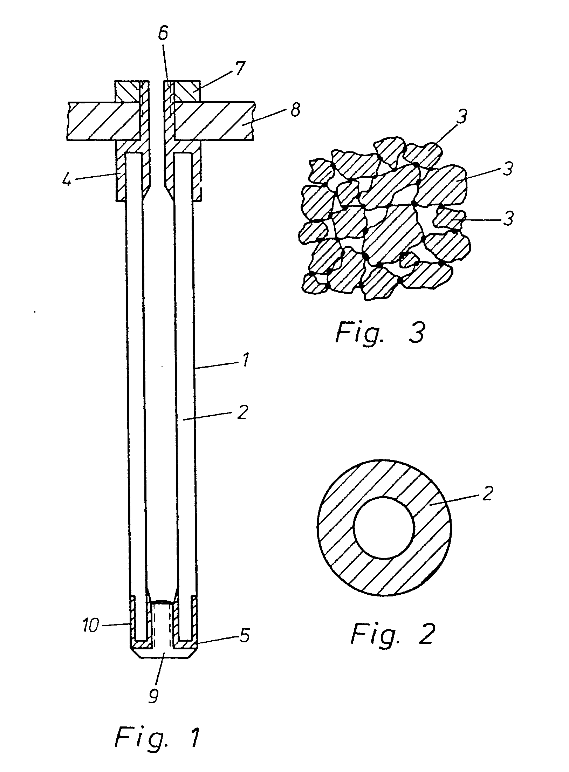

Zur Veröffentlichung mit der Zusammenfassung wird Fig 1 vorgeschlagen.

Fig. 1

EP 0 032 228 A2

*1*

Filtrox Maschinenbau A.-G.          St. Gallen, Schweiz

---

Verwendung poröser Filterrohre in Anschwemm-Kerzenfiltern

---

Die Erfindung bezieht sich auf die Verwendung bekannter
poröser Filterrohre für einen speziellen Zweck, für den
bisher aufgrund aller vorliegenden Erfahrungen und einer
Reihe von negativen Versuchsergebnissen die Anwendung
poröser Rohre für nicht realisierbar gehalten wurde.

Als Filterelemente für Staubfilter, wie sie z.B. im
Bergbaubereich Anwendung finden, sind poröse Rohre aus
aneinandergesinterten Partikeln eines hochmolekularen,
chemikalien- und wasserbeständigen Kunststoffes bekannt
geworden. Beispielsweise besteht ein bekanntes poröses Filterrohr dieser Art aus aneinandergesinterten Partikeln
von Niederdruck-Polyäthylen mit Partikelgrössen zwischen
20 und 100 $\mu$ und einer paraffinartigen Partikeloberfläche.
Diese bekannten porösen Rohre werden neben ihrem Einsatz
als Filterrohre auch noch für andere Aufgaben wie z.B. zur
Belüftung von Abwässern mittels Einblasen von Luftbläschen
in das Abwasser durch die poröse Rohrwand hindurch eingesetzt.

Andererseits ist in der Fachwelt allgemein bekannt, dass
sich als Filterkerzen für Anschwemm-Kerzenfilter wegen der
besonderen betrieblichen Anforderungen nur speziell für
diesen Zweck entwickelte Kerzenkonstruktionen eignen, die
unter anderem der Forderung genügen müssen, frei von Verstopfungsgefahr zu sein. Der Erfüllung dieser Forderung
kommt insofern eine entscheidende Bedeutung zu, als einer
der Hauptvorteile von Anschwemm-Kerzenfiltern darin liegt,
dass dort die während eines Filtriervorganges an den Aussenwänden der Filterkerzen angeschwemmten Trubkuchen nach Abschluss des Filtriervorganges durch Rückspülreinigung von
den Kerzenwänden entfernt und aus dem Filtergehäuse ausgetragen werden können und daher Anschwemm-Kerzenfilter im
Gegensatz zu den sogenannten Anschwemm-Schichtenfiltern
bzw. Filterpressen zwischen aufeinanderfolgenden Filtriervorgängen nicht geöffnet werden brauchen, was mit Filterkerzen, die nicht frei von Verstopfungsgefahr sind, nicht
mehr der Fall wäre. Zwar sind die derzeit gebräuchlichen
Kerzenkonstruktionen (Filterkerzen mit einem Zentralstab und darauf aufgeschichteten, zwischeneinander Spalte bildenden ringförmigen Metallplättchen; Filterkerzen mit einem gelochten Metallrohr als Träger einer darauf aufgewickelten, Spalte zwischen den einzelnen Windungen bildenden Drahtspirale; Filterkerzen mit einem mit sich nach innen zu erweiternden Spalte versehenen Metallrohr) auch nicht völlig frei von Verstopfungsgefahr, weil sich bei jedem Filtriervorgang in den Spalten einige Kieselgurteilchen festsetzen und so im Laufe der Zeit grössere Teile der Gesamtquerschnittsfläche der Spalte zugesetzt werden, so dass die Anschwemm-Kerzenfilter jeweils nach einigen Monaten zur Entfernung dieser Teile der Spalte zusetzenden Rückstände geöffnet werden müssen, aber erstens sind bereits Verfahren entwickelt worden, um Verstopfungen dieser Art ohne Ausbau der Filterkerzen aus dem Filtergehäuse relativ rasch beseitigen zu können (DE-PS 19 44 438), und zweitens treten eben Verstopfungen dieser Art erst nach Monaten und somit erst nach hunderten von Filtriervorgängen auf und schmälern daher den erwähnten Hauptvorteil von Anschwemm-Kerzenfiltern nur relativ wenig, wohingegen Verstopfungen der Filterkerzen, die bereits nach einem oder einigen wenigen Filtriervorgängen unter Oeffnung des Filtergehäuses beseitigt werden müssten, den besagten Hauptvorteil von Anschwemm-Kerzenfiltern praktisch nahezu vollständig zunichte machen würden.

Man hat nun schon seit langer Zeit nach neuen Möglichkeiten für die Ausbildung von Filterkerzen für Anschwemm-Ker-

zenfilter Ausschau gehalten, weil die bisherigen Filterkerzenkonstruktionen in der Herstellung noch verhältnismässig aufwendig waren und neben ihrem generellen Mangel
des Fehlens einer garantierbaren Sicherheit vor Durchbrüchen der Anschwemmschicht zum grossen Teil auch noch spezifische Mängel wie einer erhöhten Gefahr von Verstopfungen der obengenannten Art und Schwierigkeiten bei der Beseitigung derselben bei den sogenannten Plättchenkerzen
und Beschädigungsgefahren für die Drahtspirale bei der
Handhabung der damit versehenen rohrförmigen Filterkerzen
aufwiesen. Dabei wurde unter anderem auch die Verwendung
poröser Filterrohre, die ja in den verschiedensten Bereichen der Filtertechnik als Filterelemente Anwendung finden,
für Anschwemm-Kerzenfilter anstelle der gebräuchlichen,
mit Spalten versehenen Filterkerzen in Betracht gezogen,
und es wurden auch umfangreiche Versuche mit Filterrohren
aus den verschiedensten porösen Materialien wie Keramik,
Sintermetall und anderen porösen Stoffen unternommen, um
zu überprüfen, ob sich poröse Filterrohre als Filterkerzen
für Anschwemm-Kerzenfilter eignen. Die Ergebnisse dieser
vielerorts unternommenen und auch mehrfach mit unterschiedlichen Materialien wiederholten Versuche waren jedoch in
allen Fällen negativ, weil die als Filterkerzen verwendeten porösen Filterrohre unter den normalen Betriebsbedindingungen in Anschwemm-Kerzenfiltern schon nach relativ
kurzer Zeit verstopft waren. Diese negativen Ergebnisse
von Versuchen mit porösen Filterrohren als Filterkerzen
für Anschwemm-Kerzenfilter waren der Fachwelt, wie z.B.

die Ausführungen auf S. 11, Z. 7 - 21, der DE-OS 24 15 616 zeigen, schon seit langer Zeit bekannt und waren im übrigen aus den in diesen Ausführungen genannten Gründen an sich auch zu erwarten, zumal die porösen Filterrohre ja auch in ihren Anwendungsbereichen in der Filtertechnik in aller Regel nur als auswechselbare Filtereinsätze ähnlich wie z.B. Filterschichten in Filterpressen verwendet werden und sich daraus der Schluss auf eine Verstopfung dieser porösen Filterrohre jeweils unmittelbar vor dem Auswechseln ziehen lässt. Auf jeden Fall hatte sich in der Fachwelt aufgrund der erwähnten negativen Versuchsergebnisse schon seit langer Zeit die Auffassung durchgesetzt, dass poröse Filterrohre als Filterkerzen für Anschwemm-Kerzenfilter nicht geeignet seien.

Der Erfindung lag nun die Aufgabe zugrunde, neue Möglichkeiten für die Ausbildung von Filterkerzen für Anschwemm-Kerzenfilter und damit einen Weg zur Schaffung einer weder die generellen noch einer der spezifischen Mängel der bisher gebräuchlichen Kerzenkonstruktionen aufweisenden Filterkerze für Anschwemm-Kerzenfilter zu finden, ohne aber dabei neue, bei den bisher gebräuchlichen Kerzenkonstruktionen nicht auftretende Mängel in Kauf nehmen zu müssen. Insbesondere sollte der Mangel des Fehlens einer garantierbaren, also 100%-igen Sicherheit vor Durchbrüchen der Anschwemmschicht während des Filtrierbetriebes, mit dem alle bisher gebräuchlichen Kerzenkonstruktionen noch in mehr oder weniger starkem Masse behaftet waren, wenn irgend möglich behoben werden.

Es wurde nun überraschend gefunden, dass sich diese Aufgabe durch die Verwendung von dickwandigen porösen Rohren
aus aneinandergesinterten Partikeln eines hochmolekularen,
chemikalien- und wasserbeständigen Kuststoffes mit einem
über 0,05, vorzugsweise im Bereich von 0,2 bis 0,35, liegenden Verhältnis von Rohrwandstärke  zu Rohrdurchmesser
als Trägerelemente für die Anschwemmschichten bzw. als
die die Anschwemmschichten tragenden Teile der Filterkerzen in einem Anschwemm-Kerzenfilter lösen lässt.

Ueberraschend war dabei insbesondere, dass diese Sinter-
kunststoff-Filterkerzen entgegen jeder Erwartung und entgegen allen bisherigen praktischen Erfahrungen aus den erwähnten Versuchen mit porösen Filterrohren als Filterkerzen für Anschwemm-Kerzenfilter nicht zur Verstopfung neigen.

Der Hauptteil der erfindungsgemässen Verwendung ist, dass
die Sinterkuststoff-Filterkerzen eine 100%-ige Sicherheit
vor Durchbrüchen der Anschwemmschicht bieten. Dieser Vorteil ist von weitreichender wirtschaftlicher Bedeutung,
denn insbesondere in der Getränkeindustrie und speziell
bei der Bierherstellung wurden bisher wegen des Fehlens
einer 100%-igen Sicherheit vor Durchbrüchen der Anschwemmschicht und der damit verbundenen Gefahr, dass Hefezellen
und andere die Haltbarkeit der Getränke beeinträchtigende Mikroorganismen in das aus dem Anschwemm-Kerzenfilter austretende Filtrat gelangen können, zum vollständig sicheren Ausschluss dieser Gefahr hinter ein Anschwemm-Kerzenfilter entweder noch ein Schichtenfilter bzw. eine Filterpresse zum Ausfiltern von eventuellen infolge von Durchbrüchen der Anschwemmschicht in das aus dem Anschwemm-Kerzenfilter austretende Filtrat gelangten Mikroorganismen oder eine Pasteurisier-Einrichtung zur Abtötung solcher Mikroorganismen geschaltet, und beide Lösungen sind mit erheblichen Nachteilen verbunden, denn das nachgeschaltete Schichtenfilter erhöht die Anlage- und Betriebskosten der gesamten Filtriereinrichtung auf etwa das Doppelte und die keine so hohen Mehrkosten verursachende nachgeschaltete Pasteurisier-Einrichtung verschlechtert infolge der Aufheizung des Getränkes auf über 60°C die Qualität desselben insbesondere bei Bier ganz beträchtlich. Nun ist es zwar nicht so, dass Anschwemm-Kerzenfilter bisher keine Sicherheit vor Durchbrüchen der Anschwemmschicht geboten hätten, sondern mit bestimmten Kerzenkonstruktionen liess sich bei besonderer Verfahrensführung während des Filtrierbetriebes insbesondere unter Zuhilfenahme spezieller Filterhilfsmittelmischungen auch schon bisher eine nahezu 100%-ige Sicherheit vor Durchbrüchen der Anschwemmschicht erreichen, aber diese Sicherheit war eben nicht garantierbar, weil im praktischen Betrieb kleine Störungen wie z.B. durch Blasen verursachte kurzfristige Druckschwankungen und auch geringfügige Fehler in der Verfahrensführung wie z.B. ein zu schnelles und ungleichmässiges Oeffnen oder Schliessen eines handbetätigten Ventils unvermeidbar sind und die Bedingungen für eine
solche Sicherheitsgarantie daher in der Praxis nicht einhaltbar sind, was die Getränkehersteller ihrerseits bisher
gezwungen hat, zur Erfüllung der von ihnen geforderten Sicherheit hinsichtlich der Haltbarkeit der hergestellten
Getränke Einrichtungen zur Ausfilterung oder Unschädlichmachung von eventuell in dem aus dem Anschwemm-Kerzenfilter austretenden Filtrat noch vorhandenen Mikroorganismen
vorzusehen. Im Gegensatz dazu ist die durch Verwendung von
Sinterkunststoff-Filterkerzen gebotene 100%-ige Sicherheit
vor Durchbrüchen der Anschwemmschicht garantierbar, weil
die Mikroorganismen auch bei Störungen in der Anschemmschicht die bei den bisher gebräuchlichen Kerzenkonstruktionen zu Durchbrüchen führen würden, die Kerzenwand der
Sinterkunststoff-Filterkerze nicht passieren können, denn
diese wirkt praktisch ebenso wie die Filterschichten
in den erwähnten nachgeschalteten Schichtenfiltern.

Neben diesem Hauptvorteil hat die erfindungsgemässe Verwendung von Sinterkunststoff-Filterkerzen auch noch eine
ganze Reihe anderer Vorteile. So sind beispielsweise die
Herstellungskosten von Sinterkunststoff-Filterkerzen wesentlich niedriger als bei den bisher gebräuchlichen Kerzenkonstruktionen, und ferner treten u.a. gewisse bei Metall-
Filterkerzen in Extrembelastungsfällen entstehende Beschädigungsgefahren wie die Gefahr eines Krummbiegens der Kerzen bei infolge übermässiger Trubbelastung des Unfiltrats oder überhöhter Filtrierdauer aneinandergewachsenen Trubkuchen benachbarter Kerzen oder die Gefahr eines Plattdrückens von rohrartigen Metall-Filterkerzen bei überhöhten Unfiltratdrücken bei den Sinterkunststoff-Filterkerzen nicht auf.

Vorzugsweise werden für die Sinterkunststoff-Filterkerzen
poröse Kunststoffrohre verwendet, bei denen das Rohrmaterial ein Kunststoff aus der Gruppe der Thermoplaste ist.
Vorteilhaft kann der Kunststoff dabei ein Thermoplast aus
der die Alkenpolymerisate, die Polymeren von Polyhalogenolefinen, die Polyvinylderivate und Polyvinylhalogenderivate, die Polyakrylsäurederivate, die Polyamide und Polyurethane, die Polyester und Polyformaldehyd umfassenden
Gruppe von Kunststoffen sein. Innerhalb dieser Gruppe
weist die Gruppe von Thermoplasten, zu der Polyathylen,
Polypropylen, Polytetrafluoräthylen, Polytrifluormonochloräthylen, Polystyrol, die Polyvinyläther, Polyvinylchlorid, die Polymethakrylate, die Polyamide, die linearen
Polyurethane, die Polykarbonate und Polyformaldehyd gehört,
günstige Eigenschaften für die erforderliche Sinterung
der Partikel auf. Wenn die Sinterkunststoffkerzen sterilisierbar sein sollen, empfiehlt sich bei Verwendung von
porösen Kunststoffrohren aus einem Thermoplast die Verwendung solcher Rohre, bei denen der Thermoplast eine Erweichungstemperatur über 100°C hat. Von der letztgenannten
Gruppe von gut sinterbaren Thermoplasten gehören zu diesen
Thermoplasten mit über 100° Erweichungstemperatur Polyäthylen, Polypropylen, Polytetrafluoräthylen, Polytrifluormonochloräthylen, die Polymethakrylate, die Polykarbonate und Polyformaldehyd.

In vielen Anwendungsfällen, insbesondere für die Getränkefiltration, ist ferner die Verwendung poröser Kunststoffrohre von Vorteil, bei denen das Rohrmaterial ein physiologisch einwandfreier Kunststoff ist, da die Möglichkeit,
dass sich bei der Filtration kleinste Teilchen von dem porösen Kunststoffrohr ablösen und so in das Filtrat und damit bei Getränken in den menschlichen Körper gelangen,
-so unwahrscheinlich sie auch sein mag- doch nicht mit absoluter Sicherheit völlig ausgeschlossen werden kann. Als
physiologisch einwandfreie Kunststoffe kommen dabei in erster Linie Polyäthylen und Polyformaldehyd in Betracht.

Bei einer bevorzugten Form der erfindungsgemässen Verwendung werden für die Sinterkunststoff-Filterkerzen poröse
Kunststoffrohre verwendet, bei denen das Rohrmaterial Polyäthylen ist, weil Polyäthylen die meisten günstigen Eigenschaften für den vorliegenden Verwendungszweck wie
Chemikalien- und Wasserbeständigkeit, gute Sinterbarkeit,
physiologische Unbedenklichkeit und eine Erweichungstemperatur über 100°C in sich vereinigt. In erster Linie
kommt dabei hochmolekulares Niederdruck-Polyäthylen mit
über 10'000, vorzugsweise im Bereich von 50'000 bis
100'000, liegenden Molekulargewichten in Betracht.

Die Partikelgrössen der aneinandergesinterten Kunststoffpartikel der für die Sinterkunststoff-Filterkerzen zu verwendenden porösen Kunststoffrohre sollten zweckmässig im Bereich von 20 bis 100 $\mu$, liegen, und die porösen Rohre sollten zweckmässig eine mittlere Porenweite zwischen 10 und 200 $\mu$, vorzugsweise zwischen 30 und 50 $\mu$, haben. Ausserdem ist es nach den bisherigen Erfahrungen von wesentlichem Vorteil, wenn die aneinandergesinnterten Kunststoffpartikel eine paraffinartige Oberfläche haben.

Insbesondere betrifft die vorliegende Erfindung die Verwendung des eingangs genauer beschriebenen bekannten porösen Filterrohres für Filterkerzen in Anschwemm-Kerzenfiltern, also die Verwendung von dickwandigen porösen Rohren mit einer mittleren Porenweite vom 30 bis 50 $\mu$ und einem Verhältnis von Rohrwandstärke zu Rohrdurchmesser zwischen 0,2 und 0,35 aus aneinandergesinterten Partikeln von Niederdruck-Polyäthylen mit einer mittleren Partikelgrösse zwischen 20 und 100 $\mu$ und einer paraffinartigen Partikeloberfläche als die die Anschwemmschichten tragenden Teile der Filterkerzen in einem Anschwemm-Kerzenfilter.

Anhand der nachstehenden Figuren ist die Erfindung im folgenden an einem Ausführungsbeispiel näher erläutert. Es zeigen

Fig. 1 eine Filterkerze für Anschwemm-Kerzenfilter mit einem Sinterkunststoff-Filterrohr als Trägerelement für die Anschwemmschicht im Längsschnitt.

Fig. 2 einen Querschnitt durch das Sinterkunststoff-Filterrohr der Filterkerze in Fig. 1 in vergrössertem Massstab.

Fig. 3 ein die ungefähren Grössenverhältnisse zwischen
mittlerer Partikelgrösse und mittlerer Porenweite
wiedergebendes Beispiel der Anordnung der aneinandergesinterten Kunststoffpartikel in dem Sinterkunststoff-Filterrohr der in Fig. 1 gezeigten Filterkerze.

Bei der in Fig. 1 gezeigten Filterkerze 1 wird als Trägerelement für die Anschwemmschicht das poröse Sinterkunststoff-Filterrohr 2 verwendet, das aus aneinandergesinterten Partikeln 3 von im Niederdruckverfahren nach Ziegler
hergestelltem Polyäthylen mit einer mittleren Partikelgrösse von etwa 50 $\mu$ besteht und eine mittlere Porenweite
von ca. 40 $\mu$ sowie ein Verhältnis von Rohrwandstärke zu
Rohrdurchmesser von 0,266 aufweist. Das Sinterkunststoff-
Filterrohr 2 hat eine Dichte von 0,6 g/cm$^3$ und eine Porosität von ca. 40% und erlaubt Betriebstemperaturen bis ca.
100°C. Es ist wasserfest und chemisch sowohl gegen Säuren
wie auch gegen Basen ausserordentlich beständig und wird
auch von hochkonzentrierten Säuren wie beispielsweise Flusssäure, Chromsäure, Phosphorsäure und Salzsäure und von starken Laugen wie konzentrierter Natronlauge und Kalilauge ebenso wie auch von Salzlösungen aller Art nicht angegriffen. Das Rohrmaterial des Sinterkunststoff-Filterrohres 2 ist ferner gegen Alkohole, Ketone, Aldehyde und aliphatische Kohlenwasserstoffe beständig, und lediglich bei aromatischen und chlorierten Kohlenwasserstoffen können u.U. Quellerscheinungen des Materials und dadurch Veränderungen der Porenweite auftreten. Schliesslich ist das Rohrmaterial des Sinterkunststoff-Filterrohres 2 -was für die Filtration von Getränken besonders wichtig ist- vollkommen geruch- und geschmacklos und physiologisch einwandfrei und ist auch lebensmittelrechtlich zugelassen.

Die Rohrwand des Filterrohres 2 ist am oberen und unteren Rohrende von Aussen- und Innenwand umgreifenden, ringwannenförmigen Endstücken 4 und 5 aus rostfreiem Stahl eingefasst, von denen das obere Endstück 4 mit einem Gewinderohr 6 zur Befestigung der Filterkerze 1 mittels der Mutter 7 an der Kerzentragplatte 8 und das untere Endstück 5 mit einem Innengewinde zum Einschrauben der Verschlussschraube 9 versehen ist. In diese Endstücke 4 und 5 ist das Filterrohr 2 eingeklebt. Der Aussendurchmesser des unteren Endstückes 5 entspricht dem Aussendurchmesser des Filterrohres 2, damit der Trubkuchen bei der Rückspülreinigung gut von der Filterkerze 1 abgleiten kann. Daher hat das Filterrohr 2 am unteren Rohrende bis zur Höhe des oberen Endes des Endstückes 5 einen um die doppelte Stärke der Aussenwand 10 des Endstückes 5 verringerten Aussendurchmesser. Diese Aussendurchmesserverringerung am unteren Rohrende des Filterrohres 2 lässt sich entweder durch spanabhebende Bearbeitung des Sinterkunststoffrohres oder durch entsprechende Formgebung bei der Sinterung erreichen. Alternativ kann auch auf die Durchmesserverringerung am unteren Rohrende des Filterrohres 2 verzichtet und die Aussenwand des Endstückes 5 so dünn gemacht werden, dass sie keinen störenden Einfluss mehr auf das Abgleiten des Trubkuchens bei der Rückspülreinigung ausübt.

Sinterkunststoff-Filterkerzen wie in Fig. 1 wurden in umfangreichen und langandauernden Versuchsreihen unter den verschiedensten im praktischen Betrieb von Anschwemm-Kerzenfiltern vorkommenden Bedingungen getestet und auch Extrembelastungen, die bei den derzeit gebräuchlichen Filterkerzen zu Beschädigungsgefahren führen, ausgesetzt. Dabei stellte sich heraus, dass die Filtriergüte mit diesen Sinterkunststoff-Filterkerzen im Vergleich zu den günstigsten mit den gebräuchlichen Filterkerzen erreichbaren Ergebnissen noch um mehr als das Doppelte verbessert und praktisch auf die mit Filterschichten in Schichtenfiltern erreichbaren Filtriergüten angehoben werden konnte. Weiter wurde festgestellt, dass die für die Bildung der vor Filtrierbeginn anzuschwemmenden Primär-Anschwemmschichten benötigten Zeiten bei den Sinterkunststoff-Filterkerzen nur etwa halb so lang wie bei gebräuchlichen Filterkerzen sind, weil die bei allen Anschwemm-Filterkerzen bei Beginn der Bildung der Primäranschwemmschichten zunächst infolge
von anfangs die Kerzenwand passierenden Kieselgurteilchen
steil ansteigende Trübung auf der Filtratseite bei den
Sinterkunststoff-Filterkerzen wesentlich schneller als bei
den gebräuchlichen Filterkerzen wieder zurückgeht. Das
dürfte damit zusammenhängen, dass die Durchtrittsöffnungen
bei den gebräuchlichen Filterkerzen spaltförmig sind und
sich dort daher an der Kerzenaussenwand tunnelförmige Gewölbe aus Kieselgurteilchen über den Durchtrittsöffnungen
bilden, während die Durchtrittsöffnungen bei den Sinterkunststoff-Filterkerzen Poren sind und sich dort daher an
der Kerzenaussenwand eher domförmige Gewölbe aus Kieselgurteilchen über den Durchtrittsöffnungen bilden, denn die
Stabilität tunnelförmiger Gewölbe ist wesentlich geringer
als die domförmiger Gewölbe, und daher benötigt die Bildung stabiler tunnelförmiger Gewölbe aus den angeschwemmten Kieselgurteilchen auch eine wesentlich längere Zeit
als die Bildung stabiler domförmiger Gewölbe über den Poreneingängen der Sinterkunststoff-Filterkerzen.

Besondere Aufmerksamkeit wurde bei diesen Versuchsreihen
mit Sinterkunststoff-Filterkerzen der Frage gewidmet, ob
sich bei den untersuchten Sinterkunststoff-Filterkerzen
bei längerer Versuchsdauer im Laufe der Zeit Verstopfungserscheinungen einstellen würden. Zu diesem Zweck wurden
Langzeitversuche über mehrere Monate durchgeführt und periodisch die Strömungswiderstände der untersuchten Kerzen
gemessen. Ausserdem wurden einige dieser Kerzen besonders starken Trubbelastungen des Unfiltrats ausgesetzt, aber
erstaunlicherweise war von einer erhöhten Verstopfungsgefahr bei den Sinterkunststoff-Filterkerzen im Vergleich
zu den gebräuchlichen Filterkerzen nichts festzustellen.
Natürlich zeigten sich auch bei den Sinterkunststoff-Filterkerzen nach einigen Monaten Verstopfungserscheinungen,
ebenso wie ja auch bei den gebräuchlichen Filterkerzen
-wie oben schon erwähnt- nach einigen Monaten mit Verstopfungserscheinungen zu rechnen ist, aber diese erst nach
Monaten auftretenden Verstopfungserscheinungen hielten
sich bei Sinterkunststoff-Filterkerzen im gleichen Rahmen
wie bei den gebräuchlichen Filterkerzen. Die zuvor erwähnte periodische Messung der Strömungswiderstände der Sinterkunststoff-Filterkerzen ergab in den ersten Monaten
keinen nennenswerten Anstieg der Strömungswiderstände,
und auch mikroskopische Untersuchungen von den Langzeitversuchen unterworfenen und danach zur Untersuchung aufgeschnittenen Sinterkunststoff-Filterkerzen führten zu dem
Ergebnis, dass sich innerhalb der Poren in den Kerzenwänden kein verstopfender Trub sondern lediglich -ebenso wie
auch bei den gebräuchlichen Filterkerzen- Kieselgurteilchen
festgesetzt hatten. Worauf dieses überaschende Ergebnis
zurückzuführen ist, konnte noch nicht mit Sicherheit ermittelt werden. Es wird angenommen, dass die die Sinterkunststoff-Filterkerzen bildenden Kunststoffpartikel eine
abstossende Wirkung auf in die Kerzenwand gelangte Trubteilchen, also die gegenteilige Wirkung wie ein Adsorbens, ausüben und die Trubteilchen sich daher nicht an der Oberfläche der Kunststoffpartikel festsetzen können. In diesem
Fall sind für die Eigenschaft der Sinterkunststoff-Filterkerzen, nicht bzw. nicht in nennenswertem Masse zu verstopfen, die gleichen auf elektrischen Feldwirkungen in
der unmittelbaren Umgebung der Moleküle beruhenden Effekte
massgebend, die auch zur Oberflächenspannung, also den sogenannten van der Waal'schen Kräften, und zu anderen Grenzflächeneffekten wie Kapillarität und Benetzung führen. Es
ist daher sehr wahrscheinlich, dass die Eigenschaft der
Sinterkunststoff-Filterkerzen, nicht zu verstopfen, mit
der paraffinartigen, wasserabweisenden Oberfläche der
meisten Kunststoffe zusammenhängt. Daneben dürfte aber
auch die hohe Porösität der untersuchten Sinterkunststoff-
Filterkerzen für diese Eigenschaft mitentscheidend sein.
Die Sinterkunststoff-Filterkerzen sollten daher eine Porösität von wenigstens 10%, vorzugsweise jedoch von mehr als
20% und besser noch von über 30% aufweisen.

Wie weiter bei den genannten Versuchsreihen festgestellt
wurde, liess sich mit den untersuchten Sinterkunststoff-
Filterkerzen auch das in der DE-AS 17 61 617 beschriebene
spezielle Rückspülreinigungsverfahren, bei dem der Trub
breiförmig, d.h. mit nur sehr wenig Wasser vermengt, aus
dem Filtergehäuse ausgetragen wird, hervorragend durchführen. Insbesondere war die Verfahrensführung bei diesem
Rückspülreinigungsverfahren, der bei den gebräuchlichen
Filterkerzen besondere Aufmerksamkeit gewidmet werden muss,
damit sich nicht Teile des Trubkuchens vorzeitig von der Filterkerze ablösen können und infolge des dadurch entstehenden Gasdruckverlustes im Kerzeninnern die Ablösung des restlichen Trubkuchens von der Filterkerze in Frage gestellt wird, bei den untersuchten Sinterkunststoff-Filterkerzen völlig unkritisch, weil bei den Sinterkunststoff-Filterkerzen – wie eindeutig festgestellt werden konnte – bei diesem Rückspülreinigungsverfahren eine vorzeitige Ablösung von Teilen des Trubkuchens entweder ganz ausgeschlossen oder zumindest wesentlich unwahrscheinlicher als bei den gebräuchlichen Filterkerzen ist. Auf jeden Fall wurde trotz bewusst vorgenommener starker Variationen in der Verfahrensführung dieses Rückspülverfahrens bei den untersuchten Sinterkunststoff-Filterkerzen kein Fall einer unvollständigen Ablösung des Trubkuchens von der Kerze festgestellt.

Bei den obenerwähnten Extrembelastungsversuchen mit Sinterkuststoff-Filterkerzen wurde u.a. die Filtration solange fortgesetzt, bis die Trubkuchen benachbarter Kerzen an einigen Stellen zusammengewachsen waren. Durch ein solches Zusammenwachsen von Trubkuchen wird die normalerweise gleichmässige Druckverteilung in Umfangsrichtung gestört, weil der Druck auf die Kerze an den Stellen, wo die Trubkuchen zusammengewachsen sind, geringer ist als in den übrigen Bereichen, wo noch der volle Flüssigkeitsdruck wirkt. Infolge dieser ungleichmässigen Druckverteilung entstehen auf die Filterkerzen in Richtung auf die Zusammenwachsstelle wirkende Biegekräfte in der Grössenordnung einer Tonne, die sowohl bei den gebräuchlichen Filterkerzen wie auch bei den Sinterkunststoff-Filterkerzen zu einem Zusammenbiegen der benachbarten Kerzen mit zusammengewachsenen Trubkuchen führen. Im Gegensatz zu den gebräuchlichen Filterkerzen, die durch ein solches Zusammenbiegen bleibend verformt und somit praktisch unbrauchbar werden und daher nach solchen Extrembelastungen ausgewechselt werden müssen, trat jedoch bei den untersuchten Sinterkunststoff-Filterkerzen keine bleibende Verformung nach einem solchen Zusammenbiegen auf, sondern die Sinterkunststoff-Filterkerzen nahmen nach Wegfall der Extrembelastung allmählich wieder ihre vorherige Form an, d.h. sie richteten sich selbsttätig wieder gerade und konnten nach der Extrembelastung weiter benutzt werden, ohne irgendwelche durch die Extrembelastung ausgelösten Mängel zu zeigen. Dieses allmähliche selbstständige Zurückgehen der Verbiegungen bei den Sinterkunststoff-Filterkerzen lässt sich aber nicht als Elastizität sondern eher als eine Art "Erinnerungsvermögen" des Sinterkunststoffes an seine ursprüngliche Form interpretieren, denn im Moment des Wegfalls der Biegekräfte bleibt die Verbiegung noch bestehen und geht dann erst allmählich zurück, während eine rein elastische Verformung ja mit dem Wegfall der Verformungsursache, d.h. der Biegekräfte, sofort zurückgehen müsste.

Des weiteren wurden die untersuchten Sinterkunststoff-Filterkerzen im Rahmen der Extrembelastungsversuche auch ausserordentlich hohen Filtrationsdrücken ausgesetzt, die bei

den gebräuchlichen rohrförmigen Metall-Filterkerzen zum Plattdrücken der Kerze geführt hätten, und die Sinterkunststoff-Filterkerzen hielten diesen hohen Drücken ohne feststellbare Beschädigung stand. Der Grund dafür dürfte die Dickwandigkeit der Kerzenwände dieser Kerzen bzw. die im Vergleich zu der Kerzenwandstärke bei den gebräuchlichen rohrförmigen Metall-Filterkerzen etwa zehnfache Kerzenwandstärke der Sinterkunststoff-Filterkerzen in Verbindung mit dem relativ kleinen, nur etwa ein Fünftel des Gesamtquerschnittes der Kerze betragenden Querschnitt des Kerzeninnenraumes bei den untersuchten Sinterkunststoff-Filterkerzen sein. Dieser relativ kleine Kerzeninnenraumquerschnitt der Sinterkunststoff-Filterkerzen und das sich damit ergebende, im Verhältnis zum gesamten Kerzenvolumen relativ kleine Volumen des Kerzeninnenraumes hat im übrigen noch den Vorteil, dass sich erstens das nach dem im Anschluss an das Filtrationsende stattfindenden Leerdrücken des Filtergehäuses noch in den Filterkerzen befindliche sogenannte "Kerzenwasser" in den Kerzenwänden verteilen kann und daher nicht wie bei den gebräuchlichen rohrförmigen Metall-Filterkerzen unten aus den Kerzen herausläuft (dieses Herauslaufen ist aus verschiedenen Gründen unerwünscht) und dass zweitens auch der diesem Kerzeninnenraumvolumen proportionale Verlust an Filtrat bei dem besagten Leerdrücken wesentlich geringer als bei den gebräuchlichen rohrförmigen Metall-Filterkerzen gehalten werden kann.

Der Vertreter:
PATENTANWALT
DIPL. ING. W. STEUDTNER

Patentansprüche

1. Verwendung von dickwandigen porösen Rohren aus aneinandergesinterten Partikeln eines hochmolekularen, chemikalien- und wasserbeständigen Kunststoffes mit einem über 0,05, vorzugsweise im Bereich von 0,2 bis 0,35, liegenden Verhältnis von Rohrwandstärke zu Rohrdurchmesser als Trägerelemente für die Anschwemmschichten bzw. als die die Anschwemmschichten tragenden Teile der Filterkerzen in einem Anschwemm-Kerzenfilter.

2. Verwendung nach Anspruch 1, bei der das Rohrmaterial ein Kunststoff aus der Gruppe der Thermoplaste ist.

3. Verwendung nach Anspruch 2, bei der der Kunststoff ein Thermoplast aus der die Alkenpolymerisate, die Polymeren von Polyhalogenolefinen, die Polyvinylderivate und Polyvinylhalogenderivate, die Polyakrylsäurederivate, die Polyamide und Polyurethane, die Polyester und Polyformaldehyd umfassenden Gruppe von Kunststoffen ist.

4. Verwendung nach Anspruch 3, bei der der Thermoplast zu der Polyäthylen, Polypropylen, Polytetrafluoräthylen, Polytrifluormonochloräthylen, Polystyrol, die Polyvinyläther, Polyvinylchlorid, die Polymethakrylate, die Polyamide, die linearen Polyurethane, die Polykarbonate und Polyformaldehyd umfassenden Gruppe von Thermoplasten gehört.

5. Verwendung nach einem der Ansprüche 2 bis 4, bei der der Thermoplast eine Erweichungstemperatur über 100°C hat.

6. Verwendung nach den Ansprüchen 4 und 5, bei der der Thermoplast zu der Polyäthylen, Polypropylen, Polytetrafluoräthylen, Polytrifluormonochloräthylen, die Polymethakrylate, die Polyamide, die Polykarbonate und Polyformaldehyd umfassenden Gruppe von Thermoplasten gehört.

7. Verwendung nach einem der Ansprüche 1 bis 6, bei der das Rohrmaterial ein physiologisch einwandfreier Kunststoff ist.

8. Verwendung nach den Ansprüchen 6 und 7, bei der der Thermoplast zu der Polyäthylen und Polyformaldehyd umfassenden Gruppe von Thermoplasten gehört.

9. Verwendung nach einem der Ansprüche 1 bis 8, bei der das Rohrmaterial Polyäthylen ist.

10. Verwendung nach Anspruch 9, bei der das Polyäthylen ein hochmolekulares Niederdruck-Polyäthylen mit über 10000, vorzugsweise im Bereich von 50000 bis 100000, liegenden Molekulargewichten ist.

11. Verwendung nach einem der Ansprüche 1 bis 10, bei der die Partikelgrössen der aneinandergesinterten Kunststoffpartikel im Bereich von 5 bis 500 $\mu$ , vorzugsweise im Bereich von 20 bis 100 $\mu$ , liegen.

12. Verwendung nach einem der Ansprüche 1 bis 11, bei der die porösen Rohre eine mittlere Porenweite zwischen 10 und 200 $\mu$ , vorzugsweise zwischen 30 und 50 $\mu$ , haben.

13. Verwendung nach einem der Ansprüche 1 bis 12, bei der die aneinandergesinterten Kunststoffpartikel ein paraffinartige Oberfläche haben.

14. Verwendung von dickwandigen porösen Rohren mit einer mittleren Porenweite von 30 bis 50 $\mu$ und einem Verhältnis von Rohrwandstärke zu Rohrdurchmesser zwischen 0,2 und 0,35 aus aneinandergesinterten Partikeln von Niederdruck-Polyäthylen mit einer mittleren Partikelgrösse zwischen 20 und 100 $\mu$ und einer paraffinartigen Partikeloberfläche als die die Anschwemmschichten tragenden Teile der Filterkerzen in einem Anschwemm-Kerzenfilter.

0032228

Fig. 3

Fig. 1

Fig. 2